# EUROPÄISCHE PATENTSCHRIFT

(11) **EP 3 668 737 B1**
(45) Veröffentlichungstag und Bekanntmachung des Hinweises auf die Patenterteilung: **06.09.2023**
(21) Anmeldenummer: 18742991.5
(22) Anmeldetag: 16.07.2018
(51) Int. Cl.: B60K 6/20, B60K 6/30, B60K 6/387, B60K 6/48, B60K 6/547, B60W 10/00, B60W 10/02, B60W 10/06, B60W 10/08, B60W 10/113, B60W 10/24, B60W 20/40, B60W 20/00, B60W 20/30, B60W 20/10, B60W 30/192

(54) **HYBRIDANTRIEBSGETRIEBEEINHEIT SOWIE VERFAHREN ZUM BETREIBEN EINES FAHRZEUGS MIT HYBRIDANTRIEB**
HYBRID DRIVE TRANSMISSION UNIT AND METHOD FOR OPERATING A VEHICLE WITH A HYBRID DRIVE
ENSEMBLE BOÎTE DE VITESSES DE MOTORISATION HYBRIDE ET PROCÉDÉ POUR FAIRE FONCTIONNER UN VÉHICULE À MOTORISATION HYBRIDE

(30) Priorität: 18.08.2017 DE 102017214396
(43) Veröffentlichungstag der Anmeldung: 24.06.2020
(73) Patentinhaber: Bayerische Motoren Werke Aktiengesellschaft, 80809 München (DE)
(72) Erfinder: JUNG, Thomas, 80999 Muenchen (DE); KOBLER, Sebastian, 80801 München (DE); HOESS, Bernhard, 80995 Muenchen (DE)
(86) Internationale Anmeldenummer: PCT/EP2018/069203
(87) Internationale Veröffentlichungsnummer: WO 2019/034345

(56) Entgegenhaltungen:
- WO-A1-2013/083337
- WO-A1-2017/060010
- CN-A- 106 476 610
- DE-A1- 19 934 936
- DE-A1-102010 004 711
- DE-A1-102010 061 827
- DE-A1-102013 022 142
- DE-A1-102013 201 881
- US-B2- 8 386 106

## Beschreibung

Die Erfindung betrifft ein Fahrzeug mit einer Hybridantriebsgetriebeeinheit, welches zum Antrieb einen Verbrennungsmotor und einen Elektromotor aufweist, sowie ein Verfahren zum Betreiben eines Fahrzeugs mit Hybridantrieb.

Die DE 10 2010 004 711 A1 befasst sich mit einem Hybrid-Antriebsstrang und einem Verfahren zum Ansteuern desselben. Die DE 10 2010 061 827 A1 befasst sich mit einem Antriebsstrang und einem Verfahren zum Betreiber desselben. Die DE 10 2013 022 142 A1 befasst sich mit einem Hybrid-Antriebsstrang für ein Kraftfahrzeug.

Hybridantriebe für Fahrzeuge, darunter zählen Kraftfahrzeuge, Lastkraftwagen, schienengebundene Fahrzeuge, Schiffe und dergleichen, werden zunehmend wichtiger, um Schadstoffausstoß und CO₂-Ausstoß zu reduzieren. Es gibt Systeme, bei denen der Verbrennungsmotor und der Elektromotor verschiedene Achsen antreiben, und Systeme, bei denen sie gleiche Achsen oder, allgemeiner gesprochen, Abtriebswellen antreiben. Die Erfindung betrifft eine Hybridantriebsgetriebeeinheit sowie ein Verfahren zum Betreiben eines Fahrzeugs mit Hybridantrieb, bei denen Verbrennungsmotor und Elektromotor dieselbe Abtriebswelle antreiben können. Dabei gibt es Fahrzustände, bei denen nur der Elektromotor, nur der Verbrennungsmotor oder beide Motoren die Abtriebswelle antreiben.

Üblicherweise hat der Verbrennungsmotor einen eigenen Startergenerator, also einen Elektromotor, der zum Starten des Verbrennungsmotors eine sehr hohe Energie benötigt. Diese Energie muss permanent vorgehalten werden, wenn das Fahrzeug im Elektrobetriebsmodus fährt. Dies reduziert die zum elektrischen Fahren verfügbare Leistung erheblich, denn die elektrische Leistung zum Starten des Verbrennungsmotors muss permanent im Bordnetz und im Energiespeicher vorgehalten werden.

Darüber hinaus ist angedacht worden, den Elektromotor zum Antrieb des Fahrzeugs auch zum Starten des Verbrennungsmotors zu verwenden, wobei diese Systeme noch verbesserungsbedürftig sind. Insbesondere kommt es beim Starten des Verbrennungsmotors zu einem abrupten Leistungsabfall an der Abtriebswelle und zu einem ungewollten "Rucken" des Fahrzeugs.

Aufgabe der Erfindung ist es, ein Fahrzeug mit einem verbesserten Hybridantriebsgetriebeeinheit bereitzustellen, bei der obige Nachteile vermieden werden, sowie ein Verfahren zum Betreiben eines Fahrzeugs mit Hybridantrieb anzugeben, welches ebenfalls obige Nachteile vermeidet.

Die Aufgabe der Erfindung wird zum einen durch ein Fahrzeug nach Anspruch 1 gelöst. Die nachfolgenden Begriffe "elektromotornah" oder "-fern" beziehen sich nicht auf die örtliche Nähe, sondern auf die Drehmomenteinkoppelung, die direkt in das elektromotornahe Teilgetriebe erfolgt.

Das leistungsverzweigte Getriebe kann z.B. ein Planetengetriebe oder ein Doppelkupplungsgetriebe sein.

Vorzugsweise sitzt die zusätzliche Kupplung, welche nachfolgend auch als zwischengeschaltete Kupplung bezeichnet wird, einerseits an der Kurbelwelle und andererseits an der Torsionsdämpfungseinheit, wobei die Torsionsdämpfungseinheit dann zusätzlich mit dem Eingang des Doppelkupplungsgetriebes (hier ist der Begriff "Eingang" auf den Kraftfluß bei Antrieb durch den Verbrennungsmotor bezogen) direkt gekoppelt ist.

Durch die Torsionsdämpfungseinheit mit der Schwungmasse, die entweder separat ist oder in die Torsionsdämpfungseinheit integriert ist, treibt der Elektromotor im elektromotorischen Fahrbetrieb die Schwungmasse an, in der dann kinetische Energie gespeichert ist. Diese kinetische Energie und gegebenenfalls noch weitere kinetische Energie werden dann durch Schließen der zwischengeschalteten Kupplung schlagartig in den Verbrennungsmotor eingebracht, um diesen auf eine ausreichend hohe Drehzahl zu bringen, in welcher er selbst lauffähig ist. Damit steht für den Startvorgang eine höhere elektrische Leistung zur Verfügung. Darüber hinaus ist es möglich, durch entsprechend intelligentes Schalten der Teilgetriebe-Kupplungen ein abruptes Abfallen des Drehmoments an der Abtriebswelle während des Startvorgangs auszuschalten oder deutlich zu reduzieren. Die zwischengeschaltete Kupplung erlaubt einen abrupten Impulsstart des Verbrennungsmotors.

Die Torsionsdämpfungseinheit wird beispielsweise durch ein Zweimassenschwungrad, einen Torsionsdämpfer oder einen sogenannten drehzahladaptiven Tilger gebildet. Dabei kann, wie bereits erläutert, die Schwungmasse Teil der Torsionsdämpfungseinheit sein, außerhalb derselben liegen oder es kann eine zusätzliche Schwungmasse zu einer Schwungmasse, die in der Torsionsdämpfungseinheit bereits integriert ist, vorgesehen sein.

Der Elektromotor ist an eines der beiden Teilgetriebe angekoppelt, insbesondere jedoch an dasjenige, welches den 2. Gang, d. h. den zweitniedrigsten Gang, enthält. Üblicherweise ist dieses Teilgetriebe das der sogenannten "geraden" Gänge, d. h. der Gänge 2, 4, 6 usw. und gegebenenfalls des Rückwärtsgangs.

Der Elektromotor sollte sogar drehmomentfest an sein zugeordnetes Teilgetriebe angekoppelt sein, z.B. auf der Antriebsseite des Teilgetriebes zwischen Gang (d.h. den Zahnradsätzen) und der zugeordneten Teilgetriebe-Kupplung.

Die zwischengeschaltete Kupplung zwischen dem Verbrennungsmotor und der Torsionsdämpfungseinheit kann eine schnell schaltende Kupplung sein, die in weniger als 150 msec, insbesondere 50 msec, geschlossen werden kann. Man spricht auch von einer sogenannten digitalen Kupplung. Durch dieses abrupte Ankoppeln der Kurbelwelle an die Schwungmasse entsteht kaum Wärme, sodass die Energie mit weniger Verlusten in die Kurbelwelle übertragen werden kann. Die Schwungmasse reist sozusagen den Verbrennungsmotor mit.

Entscheidend für den Start des Verbrennungsmotors ist eine ausreichend hohe Drehzahl an der Schwungmasse. Diese ausreichend hohe Drehzahl kann im Fahrbetrieb durch intelligentes Schalten der beiden Teilgetriebe-Kupplungen erzeugt werden. Durch entsprechende Kopplung des Elektromotors über eine passende Schaltstrategie wird dies unterstützt.

Eine entsprechende Steuerung als Teil der Hybridantriebsgetriebeeinheit sieht gemäß einer Variante der Erfindung vor, dass nach Anforderung des Starts des Verbrennungsmotors die Schwungmasse, sobald sie eine ausreichend hohe kinetische Energie hat, von der Antriebswelle, allgemeiner gesagt vom Abtrieb durch Öffnen der Teilgetriebe-Kupplungen getrennt wird, sodass die Schwungmasse frei rotieren kann und der Elektromotor die volle Leistung zum Antrieb des Fahrzeugs bereitstellen kann. Zumindest eine der beiden Teilgetriebe-Kupplungen kann in den Schlupfbetrieb überführt werden. Durch den Schlupf erfolgt keine vollständige Abtrennung des Abtriebs vom Verbrennungsmotors.

Damit ist nachfolgend ein Impulsstart ohne Reduzierung der an der Abtriebswelle zur Verfügung stehenden elektromotorischen Leistung möglich. Die erfindungsgemäße Hybridantriebsgetriebeeinheit ist insbesondere geeignet, um den Verbrennungsmotor beim Anfahren oder im sogenannten Schleichbetrieb, beispielsweise bis 10 km/h, insbesondere bis 5 km/h zu starten. Bei diesen geringen Geschwindigkeiten sind auch nur sehr geringe Umdrehungszahlen im Antriebssystem, beispielsweise nur etwa 300 U/min, vorhanden. Diese reichen üblicherweise nicht aus, um über die entsprechend auf 300 U/min gebrachte Kurbelwelle den Motor zu starten. Die Drehzahl muss entsprechend höher sein. Dieses Erhöhen der Drehzahl ohne gleichzeitiges Beschleunigen des Fahrzeugs erfolgt durch entsprechende Schaltstrategien für die Teilgetriebe-Kupplungen, wobei vorzugsweise die Steuerung so ausgeführt ist, dass die abtriebsseitige der beiden Teilgetriebe-Kupplungen in den Schlupfbetrieb überführt wird. Abtriebsseitig ist das Teilgetriebe oder die Teilgetriebe-Kupplung dann, wenn sie im Kraftflußweg zur Abtriebswelle das letzte Teilgetriebe bzw. die letzte Teilgetriebe-Kupplung ist.

Nach dem Anlaufen des Verbrennungsmotors kann dann die schlupfende Teilgetriebe-Kupplung geschlossen werden, und das Moment des Verbrennungsmotors wird zum Antrieb des Fahrzeugs genutzt.

Die oben genannte Aufgabe wird auch durch ein Verfahren zum Betreiben eines Fahrzeugs mit Hybridantrieb und einer an den Verbrennungsmotor und seiner Kurbelwelle angeschlossenen Hybridantriebsgetriebeeinheit nach der vorliegenden Erfindung sowie mit einem mit einem Teilgetriebe gekoppelten Elektromotor gelöst, wobei eine Teilgetriebe-Kupplung des Teilgetriebes, an welche der Elektromotor gekoppelt ist, im Folgenden als "elektromotornahe Teilgetriebe-Kupplung" bezeichnet wird. Die Teilgetriebe-Kupplung des Teilgetriebes, an welche der Elektromotor nicht gekoppelt ist, wird im Folgenden als "elektromotorferne Teilgetriebe-Kupplung" bezeichnet. Das erfindungsgemäße Verfahren ist durch folgende Schritte gekennzeichnet:
a) Während des Elektrofahrbetriebs ist die zwischengeschaltete Kupplung geöffnet, und der Verbrennungsmotor ausgeschaltet, und
b) Starten des Verbrennungsmotors durch Schließen der zwischengeschalteten Kupplung und durch Übertragen der kinetischen Energie der während des Elektrofahrbetriebs angetriebenen Schwungmasse auf die Kurbelwelle, um den Verbrennungsmotor auf eine Selbstlauf-Drehzahl zu bringen.

Die zwischengeschaltete Kupplung erlaubt es, nur die Schwungmasse auf Drehzahl zu bringen, ohne dass der Verbrennungsmotor mitgeschleppt werden muss.

Vor dem Schließen der zwischengeschalteten Kupplung werden die Teilgetriebe-Kupplungen zum Starten gemäß Schritt b) und bei Erreichen einer vorgegebenen Mindestdrehzahl der Schwungmasse geöffnet oder im Schlupf gehalten, insbesondere wobei der Elektromotor dann weiterhin das Fahrzeug aufgrund der permanenten Kopplung mit einem der beiden Teilgetriebe antreibt, bis der Verbrennungsmotor ein vorgegebenes Drehmoment aufbringt und den Antrieb des Fahrzeugs übernimmt. In diesem Fall muss die Energie, die in der Torsionsdämpfungseinheit samt Schwungmasse in den zwischen den Teilgetrieben und der Torsionsdämpfungseinheit sitzenden, bewegten Teile so groß sein (d.h. Schwungmasse ist auf einer vorgegebenen Mindestdrehzahl), dass mithilfe dieser Energie der Verbrennungsmotor auf die Selbstlauf-Drehzahl gebracht werden kann.

Soll der Verbrennungsmotor gestartet werden, wenn das Fahrzeug im Elektrobetrieb erst am Anfahren oder im Kriechbetrieb ist, also vor Erreichen einer vorgegebenen Geschwindigkeit (insbesondere ca. 10 km/h, weiter insbesondere 5 km/h) so wird vor dem Schließen der zwischengeschalteten Kupplung und/oder nach dem Schließen der zwischengeschalteten Kupplung die abtriebsseitige der beiden Teilgetriebe-Kupplungen in den Schlupfbetrieb geschaltet. Die abtriebsseitige Teilgetriebe-Kupplung ist diejenige der beiden Teilgetriebe-Kupplungen, die in Drehmomentrichtung die letzte der beiden Teilgetriebe-Kupplungen zur Abtriebswelle hin ist. Dies hat folgenden Vorteil: Der Elektromotor kann hochgefahren werden, ohne dass das Fahrzeug dabei beschleunigt wird. Das erhöhte Drehmoment treibt dann die Schwungmasse an und beschleunigt sie weiter als dies ansonsten im Anfahrbetrieb oder im Schleichbetrieb möglich wäre. Wenn vor dem Schließen der zwischengeschalteten Kupplung die abtriebsseitige Teilgetriebe-Kupplung im Schlupfbetrieb ist, kann darüber hinaus der Ruck, der beim Starten des Verbrennungsmotors entsteht, nicht in den Abtrieb übertragen werden. Vielmehr rutscht die abtriebsseitige Teilgetriebe-Kupplung entsprechend durch.

Die abtriebsseitige Teilgetriebe-Kupplung wird im Schlupfbetrieb so eingestellt und der Elektromotor wird auf eine solche Drehzahl gebracht, dass ein gefordertes Drehmoment an der Abtriebsseite durch den Elektromotor aufgebracht und/oder die Schwungmasse auf die vorgegebene Mindestdrehzahl beschleunigt wird. Das bedeutet, es erfolgt eine Regelung dahingehend, dass für das Starten des Verbrennungsmotors weder ein abrupter Drehmomentsprung nach oben oder nach unten an der Abtriebswelle erfolgt. Der Verbrennungsmotor wird für die Fahrzeuginsassen unmerklich gestartet.

Unmittelbar vor Beginn des Schlupfbetriebes, üblicherweise bereits während des gesamten elektrischen Fahrbetriebs ist die zwischengeschaltete Kupplung geöffnet, sodass die schnell schaltende Kupplung indirekt über den Schlupfbetrieb von der Abtriebswelle entkoppelt ist. Zusätzlich oder alternativ bleibt der Schlupfbetrieb während des Startens des Verbrennungsmotors im Schritt b) aufrechterhalten, um den Start weiter zu unterstützen und weiterhin Drehmoment zum Abtrieb zu leiten.

Für das Starten gemäß Schritt b) bei niedriger Fahrzeuggeschwindigkeit bis zum Erreichen einer vorgegebenen Geschwindigkeit (Schleichbetrieb) und/oder während des Anfahrens des Fahrzeugs wird die elektromotornahe Teilgetriebe-Kupplung geschlossen wird und die elektromotorferne Teilgetriebe-Kupplung in einen Schlupfbetrieb gebracht. Das bedeutet, über die geschlossene elektromotornahe Teilgetriebe-Kupplung steht das gesamte Drehmoment des Elektromotors zur Verfügung, welches einerseits zum Antreiben der Schwungmasse und andererseits zum Antrieb der Abtriebswelle über die elektromotorferne Teilgetriebe-Kupplung aufgeteilt wird.

Insbesondere ist vorgesehen, dass auch nach Schließen der zwischengeschalteten Kupplung noch die elektromotornahe Teilgetriebe-Kupplung geschlossen und die elektromotorferner Teilgetriebe-Kupplung im Schlupfbetrieb ist. Das bedeutet, der Elektromotor unterstützt über die elektromotornahe geschlossene Kupplung und die geschlossene zwischengeschaltete Kupplung den Startvorgang des Verbrennungsmotors und stellt neben der kinetischen Energie der Schwungmasse zusätzliche kinetische Energie und Drehmoment zur Verfügung.

Nach dem Starten des Verbrennungsmotors gemäß Schritt b) wird die motorferne Teilgetriebe-Kupplung geschlossen, sodass das Drehmoment des Verbrennungsmotors ohne Schlupf in den Abtriebsstrang geleitet werden kann. Wenn das vom Verbrennungsmotor in das leistungsverzweigte Getriebe eingebrachte Drehmoment das vom Elektromotor eingebrachte Drehmoment erreicht oder überschreitet, wird die elektromotornahe Teilgetriebe-Kupplung geöffnet, sodass Drehmoment ausschließlich über den Verbrennungsmotor zur Abtriebswelle gelangt. Der Elektromotor wird anschließend abgeschaltet. Auch dies sorgt für einen ruckfreien Übergang zwischen elektromotorischem und verbrennungsmotorischem Fahrbetrieb.

Es gibt Anfahrsituationen oder Situationen, bei denen das Fahrzeug nicht im niedrigsten Gang gefahren wird, beispielsweise beim Anfahren bergab oder dann, wenn der Elektromotor ein enormes Drehmoment zur Verfügung stellt. Dann kann beispielsweise mit dem 2. oder 3. Gang angefahren werden. Dies würde jedoch dann dazu führen, dass die Schwungmasse auf zu geringe Drehzahl gebracht wird. Die Erfindung vermeidet dies durch weitere intelligente Schaltstrategien. Zum Starten des Verbrennungsmotors gemäß Schritt b) während des elektrischen Fahrbetriebs oberhalb einer vorgegeben Mindestgeschwindigkeit wird ein höherer als der niedrigste Gang eingelegt. Insbesondere sitzt dieser höhere Gang in dem elektromotorfernen Teilgetriebe. Die elektromotorferne Teilgetriebe-Kupplung wird dann in den Schlupfbetrieb geschaltet, wobei anschließend ein niedrigerer Gang im elektromotornahen Teilgetriebe zugeschaltet wird und die elektromotorferne Teilgetriebe-Kupplung geöffnet sowie die elektromotornahe Teilgetriebe-Kupplung geschlossen gehalten wird, so dass kein Schlupf vorhanden ist. Durch diesen Schaltvorgang kommt der niedrigere Gang in Einsatz, er beschleunigt durch dieses Herunterschalten die Schwungmasse zusätzlich.

In diesem Zusammenhang kann ferner in vorteilhafter Weise vorgesehen werden, dass nach dem Starten des Verbrennungsmotors dessen Drehmoment durch zumindest teilweises Schließen (Schlupfbetrieb oder komplettes Schließen) der elektromotorfernen Teilgetriebe-Kupplung zur Abtriebswelle geleitet wird. Die elektromotornahe Teilgetriebe-Kupplung wird geöffnet, insbesondere wobei der Elektromotor bis zum Erhöhen des Drehmoments des Verbrennungsmotors auf das Niveau des durch den Elektromotor auf die Abtriebswelle aufgebrachten Drehmoments zugeschaltet bleibt.

Beim elektrischen Anfahren während des elektrischen Fahrbetriebs (Kriechbetrieb) kann auch der 3. Gang zu Beginn eingelegt sein und oberhalb einer vorgegebenen Geschwindigkeit der 2. Gang geschaltet werden, wodurch die Abtriebswelle direkt über den 2. Gang vom Elektromotor angetrieben wird. In einem darauffolgenden Schritt wird noch vor dem Schließen der zwischengeschalteten Kupplung die elektromotornahe Teilgetriebe-Kupplung geöffnet und die elektromotorferne Teilgetriebe-Kupplung geschlossen. Als Folge hiervon wird das Drehmoment des Elektromotors über das elektromotornahe Teilgetriebe abtriebsseitig in das elektromotorferne Teilgetriebe und in die Abtriebswelle eingeleitet. Das Drehmoment wird somit an einen motorfernen Strang innerhalb des Doppelkupplungsgetriebes zurück in Richtung Schwungmasse geleitet und durch das Verwenden eines tieferen Gangs auf höhere Drehzahlen gebracht. Durch abschließendes Schließen der elektromotorfernen Teilgetriebe-Kupplung wird die Schwungmasse beschleunigt. Diese Schritte können auch dann sinnvoll sein, wenn die Geschwindigkeit des Fahrzeugs absinkt, beispielsweise wenn nach einem Anfahrvorgang bergab das Fahrzeug in einer Ebene ist oder wieder bergauf läuft. Dann kann über Herunterschalten sogar wahlweise auf den 1. Gang die Drehzahl der Schwungmasse erhöht werden. Zum Starten des Verbrennungsmotors gemäß Schritt b) wird die geschlossene Teilgetriebe-Kupplung geöffnet und die zwischengeschaltete Kupplung geschlossen. Natürlich kann auch zur Reduzierung der Drehzahl in einen höheren Gang geschaltet werden.

Generell kann nach dem Starten des Verbrennungsmotors gemäß Schritt b) eine der Teilgetriebe-Kupplungen geschlossen werden, um die Kurbelwelle mit der Abtriebswelle zu koppeln, ohne dass Schlupf entsteht.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine schematische Ansicht einer ersten Ausführungsform der Hybridantriebsgetriebeeinheit des erfindungsgemäßen Fahrzeugs, die zur Durchführung des erfindungsgemäßen Verfahrens geeignet ist, im Standbetrieb,
- Figur 2 die Hybridantriebsgetriebeeinheit nach Figur 1 beim Anfahren durch den Elektromotor in einem ersten Schritt des erfindungsgemäßen Verfahrens,
- Figur 3 die Hybridantriebsgetriebeeinheit nach Figur 1 in einem darauffolgenden Schritt beim Zustart des Verbrennungsmotors,
- Figur 4 die Hybridantriebsgetriebeeinheit in einem darauffolgenden Schritt nach dem Starten des Verbrennungsmotors, und
- Figur 5 die Hybridantriebsgetriebeeinheit nach Abschalten des Elektromotors und Antrieb nur über den Verbrennungsmotor,
- Figuren 6 bis 9 aufeinanderfolgende Schritte des erfindungsgemäßen Verfahrens mit der Hybridantriebsgetriebeeinheit nach Figur 1, wobei der Verbrennungsmotor beim Anfahren im 3. Gang zugeschaltet wird,
- Figuren 10 bis 15 aufeinanderfolgende Schritte des erfindungsgemäßen Verfahrens gemäß einer weiteren Ausführungsform beim Zuschalten des Verbrennungsmotors aus dem kriechenden Fahren im 3. Gang,
- Figur 16 eine weitere Ausführungsform der Hybridantriebsgetriebeeinheit des erfindungsgemäßen Fahrzeugs und eines ersten Schrittes des erfindungsgemäßen Verfahrens gemäß einer weiteren Ausführungsform,
- Figuren 17 und 18 dem Schritt nach Figur 16 nachfolgende Schritte des erfindungsgemäßen Verfahrens beim Zustart des Verbrennungsmotors beim Anfahren im 2. Gang,
- Figuren 19 bis 23 aufeinanderfolgende Schritte einer weiteren Ausführungsform des erfindungsgemäßen Verfahrens beim Zustarten des Verbrennungsmotors bei kriechendem Fahren im 2. Gang, und
- Figuren 24 bis 30 aufeinanderfolgende Schritte einer weiteren Variante des erfindungsgemäßen Verfahrens beim Zustarten des Verbrennungsmotors oberhalb einer vorgegebenen Mindestgeschwindigkeit.

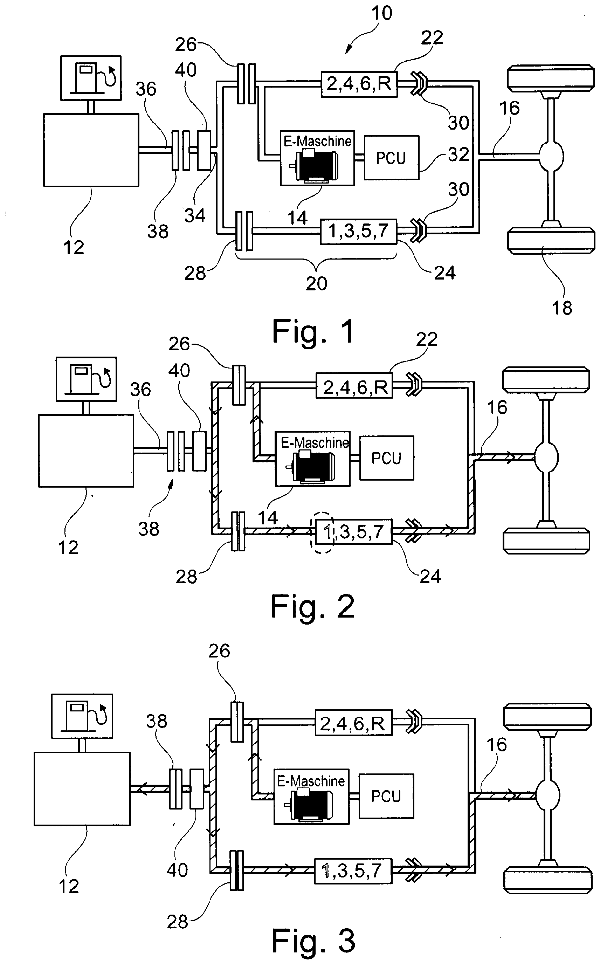

In Figur 1 ist ein Antriebsstrang eines Hybrid-Fahrzeugs dargestellt, mit einer Hybridantriebsgetriebeeinheit 10, welche einerseits einen Verbrennungsmotor 12 und andererseits mit einem Elektromotor 14 aufweist.

Eine Abtriebswelle 16, welche im vorliegenden Fall Räder 18 antreibt, kann wahlweise über den Elektromotor 14 und/oder den Verbrennungsmotor 12 angetrieben werden.

Der Elektromotor 14 ist in ein leistungsverzweigtes Getriebe 20 (hier ein Doppelkupplungsgetriebe) permanent eingekoppelt. Das leistungsverzweigte Getriebe 20 hat zwei Teilgetriebe 22, 24, sowie zugeordnete, vorgeschaltete Teilgetriebe-Kupplungen 26 bzw. 28. Über die Teilgetriebe-Kupplungen 26, 28 lässt sich entweder Drehmoment über das Teilgetriebe 22 oder das Teilgetriebe 24 oder gegebenenfalls über beide zur Abtriebswelle 16 leiten.

Das Teilgetriebe 22 umfasst beispielsweise die geraden Gänge 2, 4, 6, usw. sowie den Rückwärtsgang, während das Teilgetriebe 24 die ungeraden Gänge 1, 3, 5, usw. aufweist. Das Bezugszeichen 30 bezieht sich auf die Koppelverzahnungen der Gangstufen in den Teilgetrieben 22, 24, die aber auch Teil der Teilgetriebe sind. Das Bezugszeichen 32 bezeichnet eine Steuerung für den Elektromotor 14.

Zwischen dem Eingang 34 des Doppelkupplungsgetriebes 20 und dem Verbrennungsmotor 12 sitzt auf der Abtriebsseite des Verbrennungsmotors 12 zuerst die Kurbelwelle 36, die abtriebsseitig mit einer zwischengeschalteten, schnell schaltenden Kupplung 38 verbunden ist. Zwischen der Kupplung 38 und dem Eingang 34 des Doppelkupplungsgetriebes 20 ist eine Torsionsdämpfungseinheit 40 geschaltet, die ein Zweimassenschwungrad, ein Torsionsdämpfer oder ein drehzahladaptiver Tilger sein kann und mit einer oder mehreren Schwungmassen versehen oder mit diesen gekoppelt ist.

Die Schwungmasse ist nicht separat dargestellt, sie ist im dargestellten Ausführungsbeispiel in bekannter Weise in der Torsionsdämpfungseinheit 40 integriert.

Sämtliche Kupplungen 26, 28, 38 sind über eine Steuerung elektrisch schaltbar, die auch die Steuerung 32 sein kann.

In der in Figur 1 dargestellten Ausführungsform ist der Elektromotor 14 in das Teilgetriebe 22 drehmomentfest eingekoppelt, und zwar nach der Teilgetriebe-Kupplung 26. Aus diesem Grund werden das Teilgetriebe 22 und die Teilgetriebe-Kupplung 26 als elektromotornahes Teilgetriebe bzw. als elektromotornahe Teilgetriebe-Kupplung und das Teilgetriebe 24 als elektromotorfernes Teilgetriebe und die Teilgetriebe-Kupplung 28 als elektromotorferne Teilgetriebe-Kupplung bezeichnet.

Die zwischengeschaltete Kupplung 38 ist eine schnell schaltende Kupplung, die in weniger als 150 msec, insbesondere 50 msec, geschlossen werden kann.

In dem in Figur 1 dargestellten Zustand sind sämtliche Kupplungen 26, 28, 38 offen, das Fahrzeug befindet sich im Stand.

Vorzugsweise hat das Fahrzeug keinen separaten Starter für den Verbrennungsmotor 12, der ausschließlich über den Elektromotor 14 gestartet werden kann. Dies ist jedoch nicht einschränkend zu verstehen, vielmehr ist es auch möglich, dass das Fahrzeug sehr wohl einen Starter für den Verbrennungsmotor 12 besitzt, aber diesen nur dann nutzt, wenn das Fahrzeug nicht im Elektrobetriebsmodus ist, sondern beim Starten sofort in den Verbrennungsbetrieb geschaltet wird.

Nachfolgend wird für beide dieser Optionen erläutert, wie der Verbrennungsmotor 12 durch geschickte Schaltstrategien ausschließlich über den Elektromotor 14 aus dem rein elektrischen Fahrbetrieb abrupt und impulsmäßig angetrieben und gestartet wird, indem der Verbrennungsmotor auf eine sogenannte Selbstlauf-Drehzahl gebracht wird, auch beim Anfahren des Fahrzeugs oder im kriechenden Fahrbetrieb.

Die mit Pfeilen gekennzeichneten Drehmomentstränge geben diejenigen Drehmomentwege innerhalb des Fahrzeugs und seiner Hybridantriebsgetriebeeinheit an, in denen ein Drehmoment übertragen wird.

Figur 2 zeigt einen Anfahrbetrieb, bei dem der Verbrennungsmotor 12 ausgeschaltet ist und das Fahrzeug ausschließlich über den Elektromotor 14 betrieben wird. Das Drehmoment verläuft hierbei vom Elektromotor 14 in Richtung zum elektromotornahen Teilgetriebe 22, über die geschlossene, elektromotornahe Teilgetriebe-Kupplung 26 zur elektromotorfernen Teilgetriebe-Kupplung 28. Die Teilgetriebe-Kupplung 28 ist hier nicht vollständig geschlossen, sondern in einem Schlupfbetrieb, d. h. sie überträgt einen Teil des Drehmoments weiter in Richtung zum elektromotorfernen Teilgetriebe 24, von wo aus dann schließlich die Abtriebswelle 16 angetrieben wird.

Ein Abtrieb über die Teilgetriebe-Kupplung 22 erfolgt aufgrund eines Drehzahlangleichs in der Synchronisationseinheit im Teilgetriebe 22 nicht.

Indem die Kupplung 38 offen ist, wird die Kurbelwelle 36 nicht angetrieben. Angetrieben hingegen werden die Torsionsdämpfungseinheit 40 und ihre Schwungmasse.

Im Übrigen wird bezüglich des gerade geschalteten Ganges der entsprechende Gang mit einem Kreis aus einer unterbrochenen Linie symbolisiert. Bei Figur 2 ist der 1. Gang geschaltet.

Durch den Schlupf in der Teilgetriebe-Kupplung 28 ist es möglich, die Torsionsdämpfungseinheit 40 auf eine Drehzahl hochzufahren, die höher als diejenige Drehzahl ist, die nach der Teilgetriebe-Kupplung 28 zum Teilgetriebe 24 geleitet wird. Damit wird die Schwungmasse auf eine höhere Drehzahl gebracht, ohne dass die Abtriebswelle 16 mitbeschleunigt wird.

Sobald eine Startaufforderung vorliegt und eine ausreichende kinetische Energie über die schnell drehende Schwungmasse vorhanden ist, um damit den Verbrennungsmotor 12 auf eine Selbstlauf-Drehzahl zu beschleunigen, wird die Kupplung 38 geschlossen (Figur 3), und abrupt wird der Verbrennungsmotor 12 mitgerissen und wird somit fremdgestartet. Die Kupplungen 26, 28 können in dem Zustand bleiben, in dem sie in Figur 2 waren. Sollte durch das abrupte Zuschalten ein Ruck in das leistungsverzweigte Getriebe 20 eingeleitet werden, so überträgt die sich im Schlupfbetrieb befindliche Kupplung 28 diesen Ruck nicht auf die Abtriebswelle 16. In gewisser Weise ist damit der Abtrieb über die Teilgetriebe-Kupplung 28 vom Verbrennungsmotor entkoppelt.

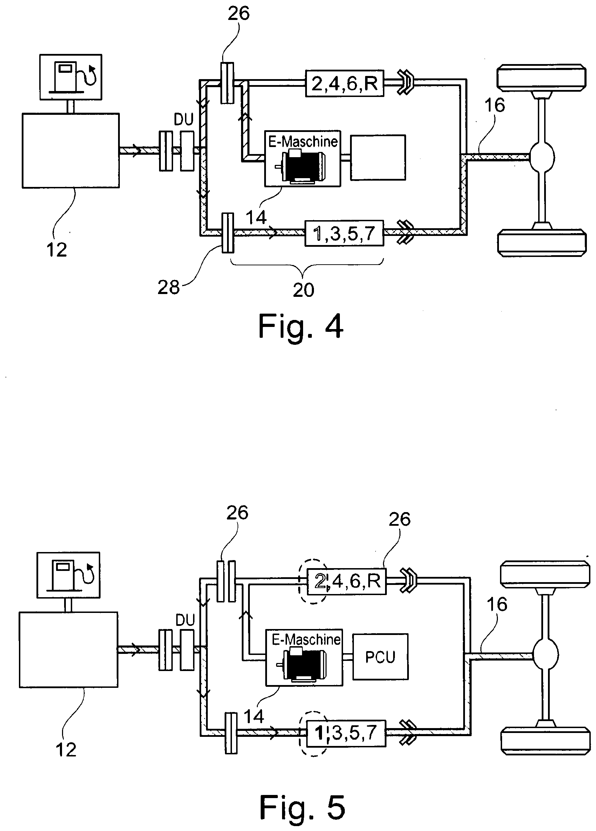

Im nächsten Verfahrensschritt (Figur 4) ist der Verbrennungsmotor 12 gestartet und bringt selbst ein Drehmoment in das leistungsverzweigte Getriebe 20 ein, wie mit Pfeilen dargestellt. Die Teilgetriebe-Kupplung 28 wird weiter geschlossen oder vollständig geschlossen, sodass der Schlupf abgebaut wird.

Auch der Elektromotor 14 leitet ein Drehmoment in das leistungsverzweigte Getriebe 20 ein, sodass kurzzeitig sowohl der Verbrennungsmotor 12 als auch der Elektromotor 14 ein Drehmoment für die Abtriebswelle 16 zur Verfügung stellen.

Anschließend wird gemäß Figur 5 die Teilgetriebe-Kupplung 26 geöffnet, der Elektromotor 14 abgeschaltet, und der Antrieb erfolgt nur über den Verbrennungsmotor 12. In dem Teilgetriebe 26 wird dann bereits der 2. Gang vorgewählt, was wieder durch einen Kreis aus einer unterbrochenen Linie symbolisiert wird. Der 2. Gang ist allerdings noch nicht drehmomentübertragend.

Dieselbe Hybridantriebsgetriebeeinheit, die in Figur 1 dargestellt ist und zu dem das Verfahren mit den Figuren 2 bis 5 zuvor erläutert wurde, kann auch bei einer anderen Situation oder generell anders betrieben werden, wenn beispielsweise das Fahrzeug leicht bergab anfährt oder wenn ein Elektromotor 14 mit extrem hohem Drehmoment zur Verfügung steht. In diesem Fall wird nicht mit dem 1. Gang angefahren, sondern mit dem 3. Gang im Teilgetriebe 24.

Entsprechend Figur 2 erfolgt die Drehmomentübertragung zur Abtriebswelle 16 über die geschlossene Teilgetriebe-Kupplung 26 und die sich im Schlupfbetrieb befindliche Teilgetriebe-Kupplung 28, und schließlich über den 3. Gang im Teilgetriebe 24. Zu diesem Zeitpunkt ist die Kurbelwelle 36 aufgrund der offenen Kupplung 38 nicht angetrieben. Aber, entsprechend Figur 2, wird die Schwungmasse der oder in der Torsionsdämpfungseinheit 40 auf erhöhte Drehzahl gebracht.

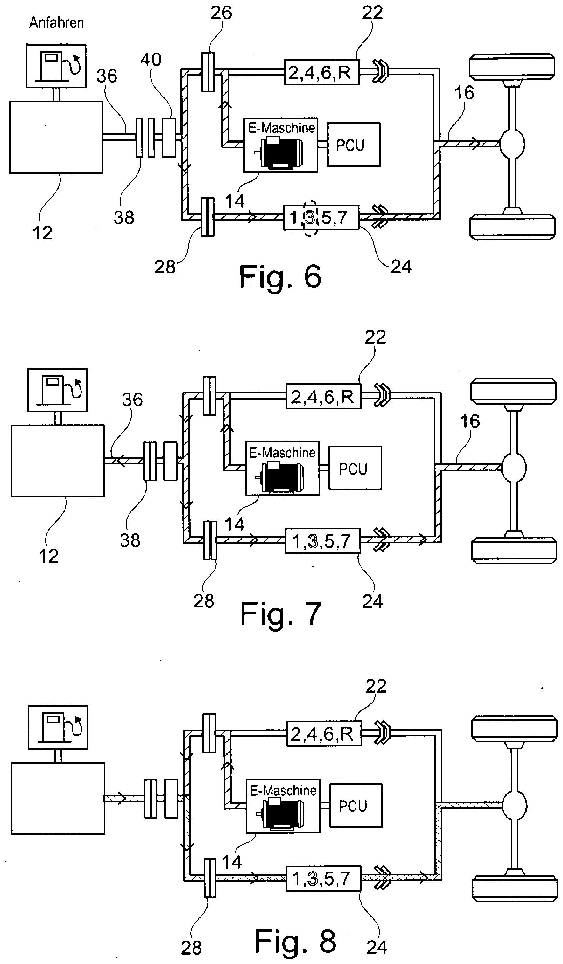

Zum Verbrennungsmotorstart wird anschließend gemäß Figur 7, entsprechend Figur 3, die Kupplung 38 schlagartig geschlossen. Die Abtriebswelle 16 ist aufgrund der im Schlupf befindlichen Teilgetriebe-Kupplung 28 vom Verbrennungsmotor 12 und der Kurbelwelle 36 teilweise entkoppelt, sodass kein Ruck im Abtriebsstrang erzeugt wird. Der Verbrennungsmotor 12 wird abrupt hochgefahren, bis er seine Selbstlauf-Drehzahl erreicht hat und startet, was in Figur 8 dargestellt ist, die bis auf die Tatsache, dass der 3. und nicht der 1. Gang geschaltet ist, dem Zustand nach Figur 4 entspricht.

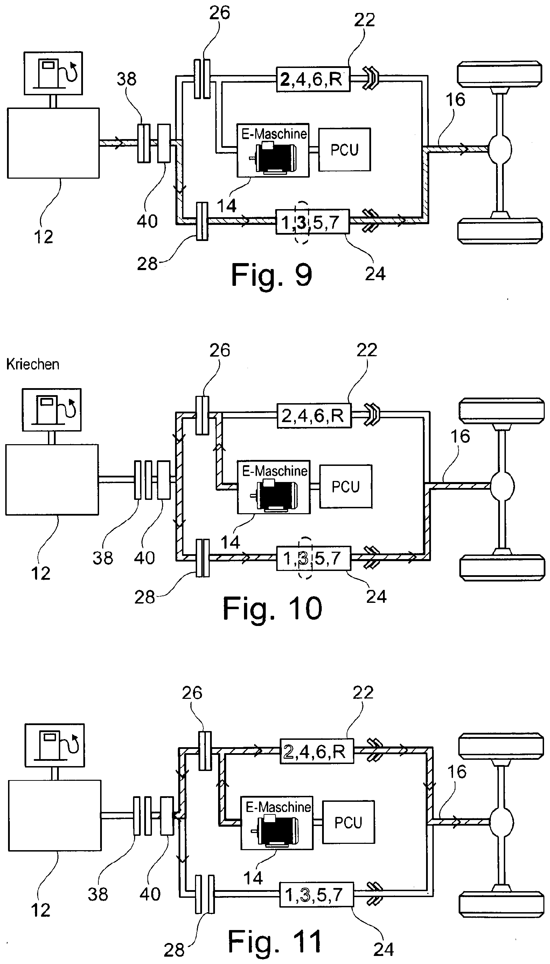

Anschließend (Figur 9) wird wie bei Figur 5 die Teilgetriebe-Kupplung 26 geöffnet, der Elektromotor 14 abgeschaltet und die Teilgetriebe-Kupplung 28 geschlossen, sodass eine Momentenübergabe vom Elektromotor 14 auf den Verbrennungsmotor 12 stattfindet und nur dieser die Abtriebswelle 16 antreibt.

Dieses Anfahren nach dem vorerwähnten Verfahren gemäß der Figuren 2 bis 9 erfolgt nur bis zu einer gewissen vorgegebenen Geschwindigkeit.

Befindet sich das Fahrzeug oberhalb einer vorgegebenen Minimalgeschwindigkeit, die der gerade erwähnten Grenzgeschwindigkeit entsprechen kann, wird bei einem Kriechbetrieb (das Fahrzeug fährt nach wie vor sehr langsam), das nachfolgend an Figur 10 bis 15 beschriebene Verfahren angewandt, um den Verbrennungsmotor aus dem Elektromotorbetrieb heraus zu starten. Hier ist beispielsweise gemäß Figur 10 weiterhin der 3. Gang geschaltet, sodass im Kriechbetrieb nur der Elektromotor 14 über die geschlossene Teilgetriebe-Kupplung 26 und die sich im Schlupfbetrieb befindliche Teilgetriebe-Kupplung 28 und das Teilgetriebe 24 die Abtriebswelle 16 antreibt.

Zu betonen ist generell, dass für den Fall, dass das Fahrzeug nur im elektromotorischen Betrieb fahren soll und der Verbrennungsmotor 12 nicht zugeschaltet werden soll, natürlich die Teilgetriebe-Kupplung 28 auch vollständig geschlossen werden kann, um keine Energie in der Teilgetriebe-Kupplung 28 zu verschwenden. Nur dann, wenn ein entsprechendes Signal zum Zustarten des Verbrennungsmotors 12 von der Steuerung abgegeben wird, wird dann die Teilgetriebe-Kupplung 28 in den Schlupfbetrieb überführt, der zuvor erläutert ist und der u. a. auch in Figur 10 dargestellt ist.

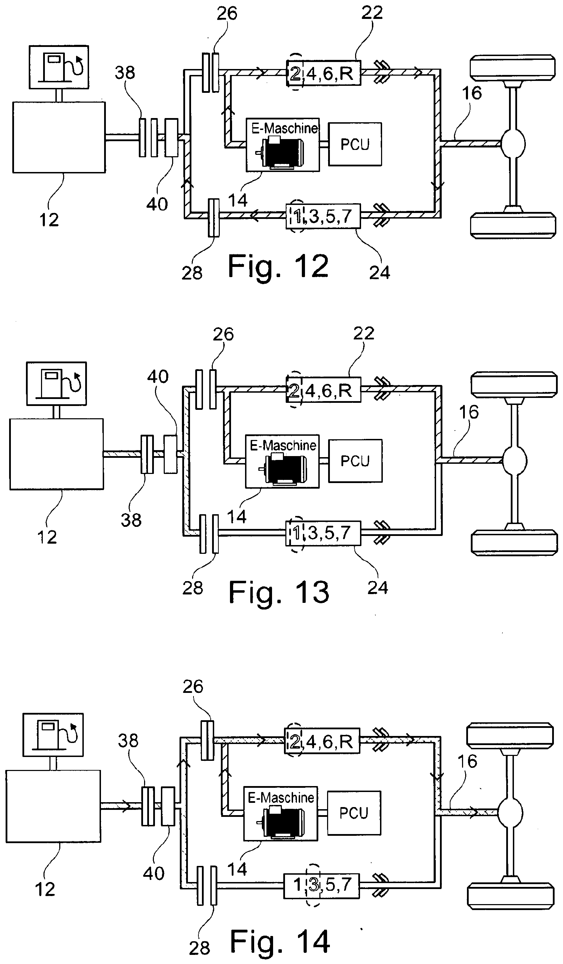

Im Kriechbetrieb kann es optional vorteilhaft sein, durch Umschalten des Antriebsweges auf das Teilgetriebe 22 und unter Ausnutzung des 2. Gangs, welcher durch Schlupfaufbau in der Teilgetriebe-Kupplung 28 synchronisiert wird, die Schwungmasse auf eine höhere Drehzahl zu bringen und nachfolgend, ohne Schlupf in den Teilgetriebe-Kupplungen, zu halten. Hierzu wird gemäß Figur 11 die Teilgetriebe-Kupplung 28 geöffnet, sodass das vom Elektromotor 14 eingeleitete Drehmoment einerseits über das Teilgetriebe 22 dem Abtrieb 16 zugeleitet wird und andererseits über die geschlossene Teilgetriebe-Kupplung 26 zum Beschleunigen der Torsionsmasse bei offener Kupplung 38 verwendet wird. Gegebenenfalls kann dann, wenn ein Start des Verbrennungsmotors angefordert wird, die Kupplung 38 gemäß Figur 13 abrupt geschlossen werden. In diesem Fall wird der später erläuterte Schritt gemäß Figur 12 übersprungen.

Damit vom 3. in den 2. Gang (von Figur 10 auf Figur 11) geschaltet werden kann, muss die Geschwindigkeit des Fahrzeugs aber zumindest eine Grenzgeschwindigkeit erreicht haben, welche das Schalten in den 2. Gang erlaubt. Solche Grenzgeschwindigkeiten sind steuerungsmäßig hinterlegt.

Optional kann nach dem Schritt gemäß Figur 11 ein weiteres Hochdrehen der Schwungmasse der Torsionsdämpfungseinheit 40 dadurch erreicht werden, dass auf den 1. Gang zurückgeschaltet wird. Dabei wird die Teilgetriebe-Kupplung 26 geöffnet, sodass über diese kein Drehmoment zur Torsionsdämpfungseinheit 40 gelangen kann. Vielmehr verläuft das Drehmoment über das Teilgetriebe 22 zur Abtriebswelle 16. Die Teilgetriebe-Kupplung 28 wird aber entweder im Schlupfbetrieb oder vollständig zugeschaltet, sodass Drehmoment über den Abtrieb des Teilgetriebes 22 in das Teilgetriebe 24 eingeleitet wird, wo es aufgrund der niedrigen Übersetzung des geschalteten 1. Gangs zu einer Erhöhung der Drehzahl der Torsionsdämpfungseinheit 40 und der Schwungmasse verglichen mit dem Zustand nach Figur 11 führt.

Somit kann auch bei einer Geschindigkeitsreduzierung die kinetische Energie in der Schwungmasse und den damit unmittelbar gekoppelten Teilen bis zu den Teilgetriebe-Kupplungen 26, 28 zum Hochfahren des Verbrennungsmotors 12 sichergestellt werden und für einen Zustart die Teilgetriebe-Kupplungen 26, 28 geöffnet und die Kupplung 38 geschlossen werden, wie in Figur 13 gezeigt. In diesem Fall kann der Elektromotor 14 keine weitere Energie beim Starten des Verbrennungsmotors einleiten, vielmehr treibt der Elektromotor 14 nun ausschließlich die Abtriebswelle 16 an. Dieses Schaltverhalten kann generell bei ausreichender Drehzahl und der Kopplung des Elektromotors über einen geschalteten Gang im Teilgetriebe 22 immer angewandt werden.

Sobald der Verbrennungsmotor 12 gestartet ist, siehe Figur 14, wird die Teilgetriebe-Kupplung 26 geschlossen, und sowohl der Verbrennungsmotor 12 als auch der Elektromotor 14 treiben die Abtriebswelle 16 kurzzeitig an.

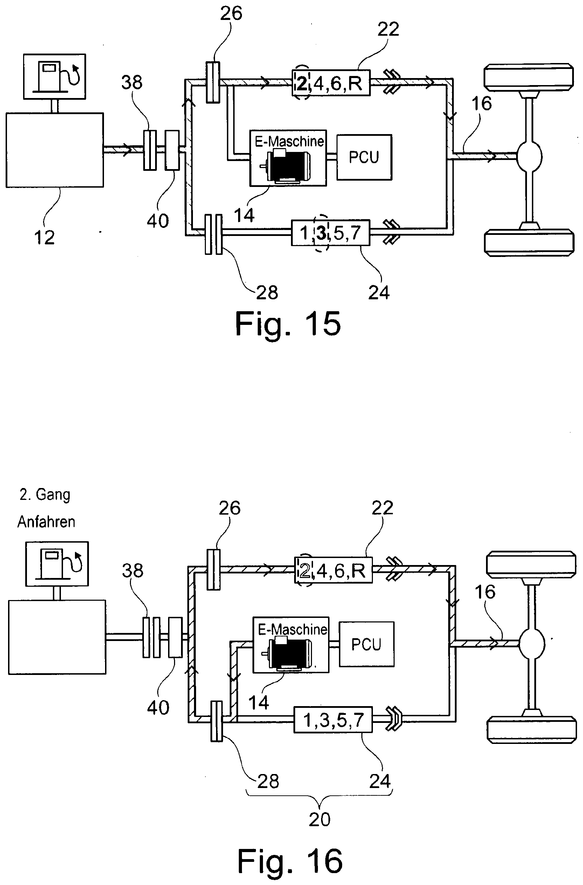

Nach dem Momentenübergang (siehe Figur 15), wird dann der Elektromotor 14 ausgeschaltet. Der 3. Gang ist dann wieder bereits vorgewählt, während im 2. Gang gefahren wird. Alternativ kann auch die Teilgetriebe-Kupplung 28 geschlossen werden, der Verbrennungsmotor treibt dann über den 3. Gang des Teilgetriebes 24 die Abtriebswelle 16 an, dann ist die Teilgetriebe-Kupplung 26 geöffnet.

Figur 16 zeigt eine weitere Ausführungsform der erfindungsgemäßen Hybridantriebsgetriebeeinheit, die prinzipiell sehr ähnlich zu der nach den vorherigen Figuren aufgebaut ist. Der einzige Unterschied besteht darin, dass hier der Elektromotor 14 in den Strang des Doppelkupplungsgetriebes 20 drehmomentfest eingebunden ist, der mit dem niedrigsten Gang versehen ist, also dem Strang mit dem Teilgetriebe 24 und der Teilgetriebe-Kupplung 28. Bei dieser Ausführungsform ist also das Teilgetriebe 24 das elektromotornahe Teilgetriebe 24 und die Teilgetriebe-Kupplung 28 die elektromotornahe Teilgetriebe-Kupplung, wogegen das Teilgetriebe 22 das elektromotorferne Teilgetriebe und die Teilgetriebe-Kupplung 26 die elektromotorferne Teilgetriebe-Kupplung ist.

Gemäß Figur 16 soll das Fahrzeug im 2. Gang über den Elektromotor 14 anfahren, sodass die Teilgetriebe-Kupplung 28 geschlossen und die Teilgetriebe-Kupplung 26 im Schlupfbetrieb ist. Die Kupplung 38 ist offen, und über den Elektromotor 14 wird die Schwungmasse auf eine hohe Drehzahl gebracht, ohne dass diese hohe Drehzahl in Richtung Abtriebswelle 16 geleitet wird, was durch den Schlupfbetrieb der Teilgetriebe-Kupplung 26 erreicht wird.

Entsprechend Figur 2 wird kein Drehmoment über das Teilgetriebe 24 in Richtung Abtriebswelle 16 geleitet, weil in der Synchronisationseinheit kein Moment übertragen wird und kein Gang eingelegt ist.

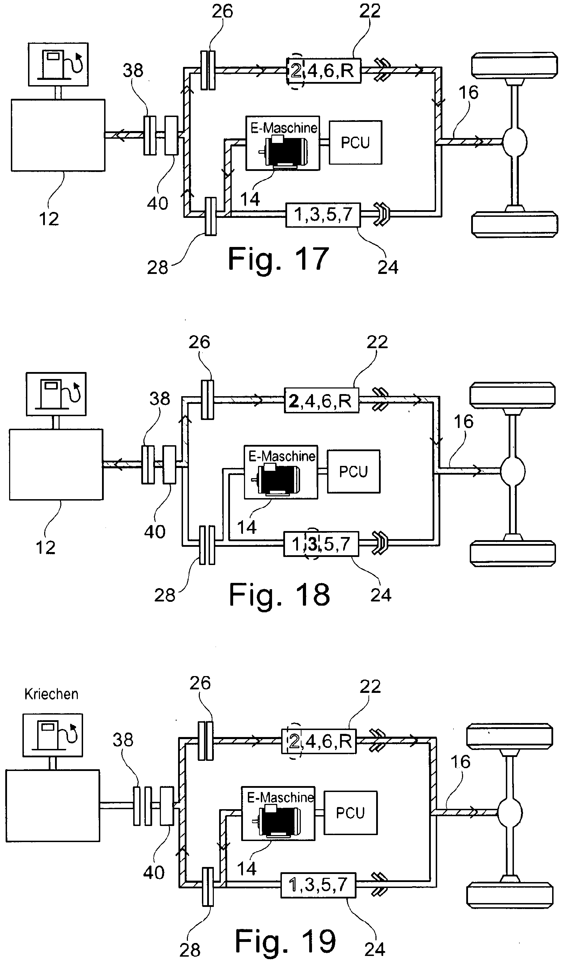

Auf Anforderung wird die Kupplung 38 schlagartig geschlossen (Figur 17), sodass auch hier über die kinetische Energie vor allem oder ausschließlich mithilfe der Schwungmasse 40 und der Rotorträgheit des Elektromotors 14 der Verbrennungsmotor 12 auf die Selbstlauf-Drehzahl zum Starten gebracht wird. In dieser Zeit treibt aber der Elektromotor 14 weiterhin über das Teilgetriebe 22 die Abtriebswelle 16 an. Wie bei den vorherigen Ausführungsformen kann jedoch der Elektromotor 14 während des Startvorgangs des Verbrennungsmotors 12 weiterhin Energie zur Schwungmasse fördern.

Figur 18 zeigt dann den Betrieb, nachdem die Momentenübergabe an den Verbrennungsmotor 12 stattgefunden hat und die Teilgetriebe-Kupplung 28 geöffnet und die Teilgetriebe-Kupplung 26 komplett geschlossen wurde. Der Elektromotor 14 ist dabei ausgeschaltet, der 2. Gang ist eingelegt, der 3. Gang ist vorgewählt, um beim anschließenden Beschleunigen in den 3. Gang zu schalten.

Figur 19 zeigt einen anderen Fahrbetrieb, nämlich dann, wenn das Fahrzeug eine vorgegebene Geschwindigkeit überschritten hat und im Kriechbetrieb ist. Auch hier ist die vorgegebene Geschwindigkeit hinterlegt. Die Geschwindigkeit ist dabei so gewählt, dass durch den Schlupf in der Teilgetriebe-Kupplung 26 der erste Gang schaltbar ist. Der Elektromotor 14 treibt hier noch über die geschlossene Teilgetriebe-Kupplung 28 und die im Schlupfbetrieb befindliche Teilgetriebe-Kupplung 26 den 2. Gang und damit die Abtriebswelle 16 an. Die Kupplung 38 ist offen, die Schwungmasse 40 wird beschleunigt. Ein Abtrieb über die Teilgetriebe 24 erfolgt aufgrund eines Drehzahlangleichs in der Synchronisationseinheit noch nicht.

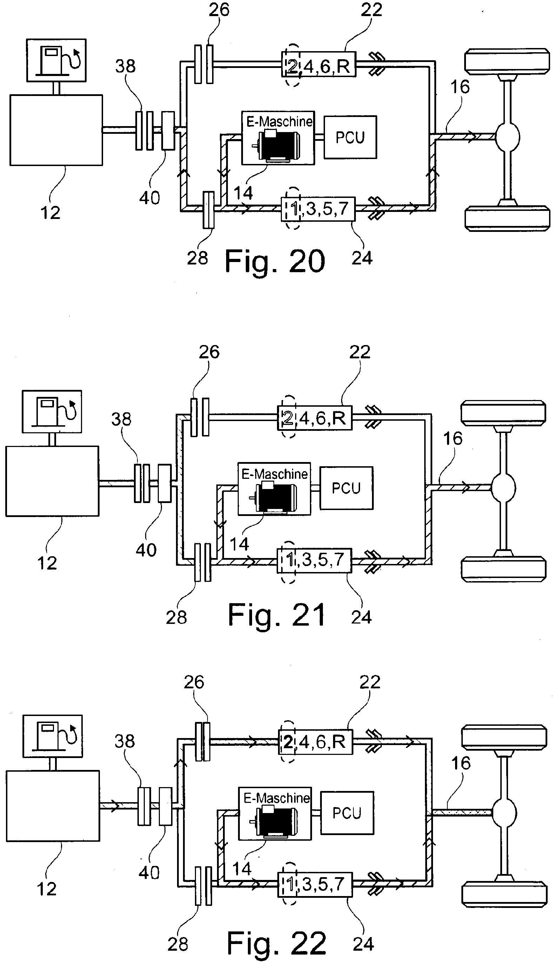

Anschließend (Figur 20) wird durch Öffnen der Teilgetriebe-Kupplung 26 der Momentenfluss auf das Teilgetriebe 24 übergeben und der Elektromotor 14 treibt über den 1. Gang die Abtriebswelle 16 an. Über die geringere Übersetzung des 1. Ganges dreht die Schwungmasse 40 mit ausreichender Drehzahl, ohne dass eine Teilgetriebe-Kupplung im Schlupfbetrieb Moment übertragen muss.

Damit steht genügend kinetische Energie in der Schwungmasse 40 zur Verfügung, um mit Öffnen der Teilgetriebe-Kupplung 28 und anschießendem Schließen der Kupplung 38 den Verbrennungsmotor zu starten, siehe Figur 21, sodass der Elektromotor 14 ausschließlich die Abtriebswelle 16 mit kinetischer Energie versorgt.

Ist der Motor gestartet, wird gemäß Figur 22 die Teilgetriebe-Kupplung 26 zumindest in den Schlupfbetrieb gebracht, sodass das Drehmoment des Verbrennungsmotors über die Teilgetriebe-Kupplung 26 in den 2. Gang des Teilgetriebes 22 eingeleitet und zur Abtriebswelle 16 geleitet wird, während gleichzeitig auch der Elektromotor 14 über das Teilgetriebe 24 die Abtriebswelle 16 mit antreibt.

Alternativ kann der Verbrennungsmotor 12 auch durch Schließen der Teilgetriebe-Kupplung 28 mit dem 1. Gang angebunden werden, dann ist die Teilgetriebe-Kupplung 26 geöffnet.

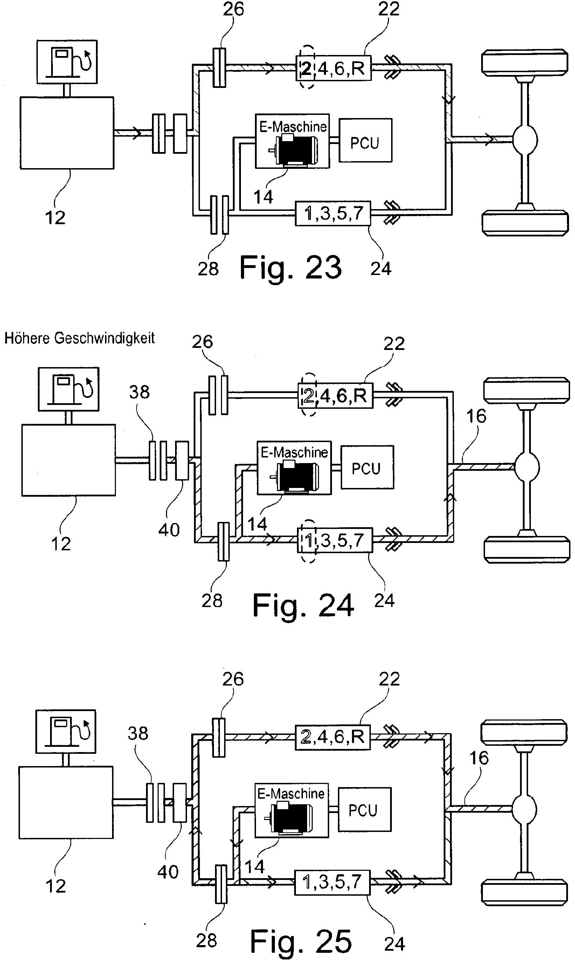

Figur 23 zeigt dann den Zustand bei ausgeschaltetem Elektromotor und Antrieb nur über den Verbrennungsmotor 12.

Figur 24 zeigt einen Ausgangszustand, wenn das Fahrzeug im Elektrobetrieb ist, aber oberhalb einer vorgegebenen Grenzgeschwindigkeit fährt.

Diese Grenzgeschwindigkeit kann die Grenzgeschwindigkeit sein, ab der die Kriechgeschwindigkeit vorliegt, oder aber darunter liegen. In der Praxis kann sie aber auslegungsbedingt auch höher als die Kriechgeschwindigkeit sein. In jedem Fall ist diese Geschwindigkeit so gewählt, dass noch mit dem 1. Gang gefahren werden kann.

In dieser Situation treibt der Elektromotor 14 über den 1. Gang des Teilgetriebes 24 die Abtriebswelle 16 an und gleichzeitig über die geschlossene Teilgetriebe-Kupplung 28 die Schwungmasse. Die Teilgetriebe-Kupplung 26 ist offen, und über das Teilgetriebe 22 wird kein Drehmoment übertragen. Der 2. Gang ist vorgewählt.

Die Geschwindigkeit des Fahrzeugs ist jedoch in diesem Fall so hoch, dass auch in den 2. Gang geschaltet werden kann, siehe Figur 25, und dabei noch genügend Energie und Drehzahl zur Verfügung steht, um die Schwungmasse auf die gewünschte Mindestdrehzahl zu bringen, die für das Antreiben des Verbrennungsmotors auf die Selbstlauf-Drehzahl erforderlich ist.

In diesem Fall ist die Teilgetriebe-Kupplung 26 im Schlupfbetrieb und die Teilgetriebe-Kupplung 28 geschlossen. Dies ermöglicht, dass durch Erhöhen des Momentes in der Teilgetriebe-Kupplung 26 der Momentenfluss vom Teilgetriebe 24 auf das Teilgetriebe 22 umgeleitet wird und zur Abtriebswelle 16 gelangt.

Dieser in Bezug auf Figur 25 dargestellte Verlauf kann natürlich auch bei der Hybridantriebsgetriebeeinheit nach Figur 1 angewandt werden, wenn mit einem niedrigen Gang gefahren wird und ein höherer Gang ausreichend wäre, um die Schwungmasse auf die erforderliche Drehzahl zu bringen.

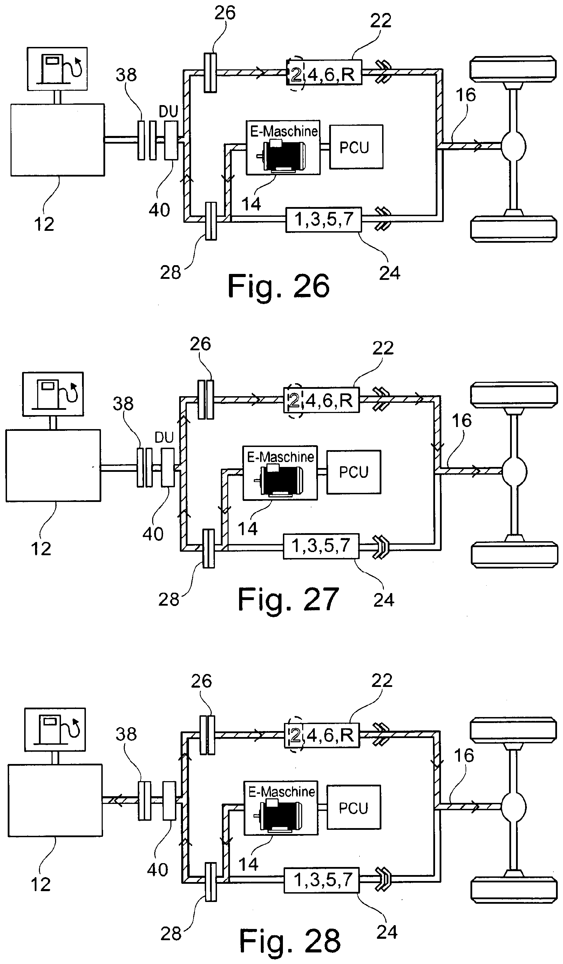

Nach abgeschlossener Momentenübernahme wird gemäß Figur 26 der 1. Gang ausgelegt, und beide Teilgetriebe-Kupplungen 26, 28 werden geschlossen. Über das Teilgetriebe 24 erfolgt keine Momentenübertragung. Die Kupplung 38 ist noch offen.

Anschließend geht die Teilgetriebe-Kupplung 26 in den Schlupfbetrieb (siehe Figur 27), wogegen die Teilgetriebe-Kupplung 28 geschlossen bleibt. Hierbei kann die Schwungmasse auf eine höhere Drehzahl gebracht werden und über den Schlupfbetrieb in der Teilgetriebe-Kupplung 26 weiterhin über das Teilgetriebe 22 die Abtriebswelle 16 angetrieben werden.

Anschließend erfolgt gemäß Figur 28 durch Schließen der Kupplung 38 der sogenannte Impulsstart. Während dieses Starts bleibt die Teilgetriebe-Kupplung 26 im Schlupfbetrieb.

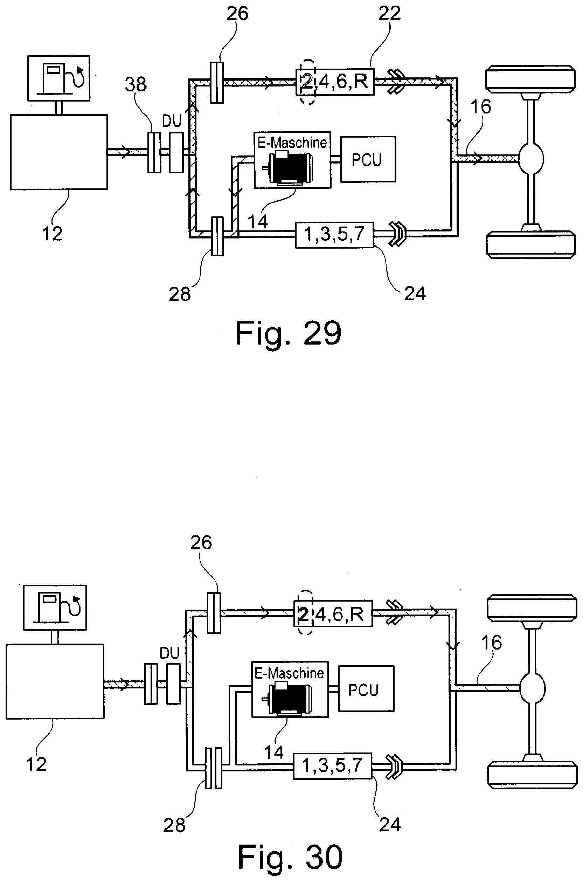

Figur 29 zeigt den Zustand, wenn der Verbrennungsmotor 12 gestartet ist. Die Teilgetriebe-Kupplung 26 wird geschlossen und baut den Schlupf ab. Sowohl der Verbrennungsmotor als auch der Elektromotor leiten Drehmoment über das Teilgetriebe 22 zur Abtriebswelle 16.

Schließlich kann die Teilgetriebe-Kupplung 28 geöffnet und der Elektromotor 14 ausgeschaltet werden, siehe Figur 30.

Der Elektromotor kann natürlich bei Antrieb durch den Verbrennungsmotor 12 auch als Generator zum Boosten zugeschaltet werden oder zum Rekuperieren.

Bei der Ausführungsform nach Figur 30 beispielsweise kann der Elektromotor über den 1., 2., 3., 5. oder 7. Gang angebunden werden. Entsprechende Möglichkeiten stehen natürlich auch für die vorhergehende Ausführungsform zur Verfügung. Generell ist zu betonen, dass dann, wenn genügend kinetische Energie in der Schwungmasse zur Verfügung steht, beide Teilgetriebe-Kupplungen 26, 28 geöffnet werden können, sodass die Leistung des Elektromotors 14 nur für den Abtrieb zur Verfügung steht und nicht auch zum Verbrennungsmotor 12 gelenkt wird. In diesem Fall kann die Leistung des Elektromotors 14 reduziert werden. Alternativ kann bei der Anforderung des Zustarts des Verbrennungsmotors auch je nach Ausführungsform entweder die Teilgetriebe-Kupplung 26 oder 28 in den Schlupfbetrieb überführt werden. Damit ist ebenfalls ein gewünschter Impulsstart möglich.

## Patentansprüche

1. Fahrzeug mit einen Verbrennungsmotor (12) und einem Elektromotor (14) zum Antrieb des Fahrzeugs und mit einer Hybridantriebsgetriebeeinheit, die eine Abtriebswelle (16), ein zwischen Verbrennungsmotor (12) und Abtriebswelle (16) zwischengeschaltetes leistungsverzweigtes Getriebe (20) mit Teilgetrieben (22, 24) und mit Teilgetriebe-Kupplungen (26, 28), welche den Teilgetrieben (22, 24) zugeordnet sind, aufweist, wobei der Elektromotor (14) an eines der Teilgetriebe, welches ein elektromotornahes Teilgetriebe ist, angekoppelt ist, um über dieses Teilgetriebe die Abtriebswelle (16) antreiben zu können, **gekennzeichnet durch** eine zwischen dem Verbrennungsmotor (12) und dem leistungsverzweigten Getriebe (20) zwischengeschaltete Torsionsdämpfungseinheit (40) mit einer Schwungmasse und durch eine zwischen dem Verbrennungsmotor (12) und der Torsionsdämpfungseinheit (40) zwischengeschaltete Kupplung (38).

2. Fahrzeug nach Anspruch 1, **dadurch gekennzeichnet, dass** die Torsionsdämpfungseinheit (40) ein Zweimassenschwungrad, ein Torsionsdämpfer oder ein drehzahladaptiver Tilger ist.

3. Fahrzeug nach Anspruch 1 oder 2, **dadurch gekennzeichnet, dass** der Elektromotor (14) an dasjenige Teilgetriebe (22) angekoppelt ist, welches einen zweitniedrigsten Gang enthält.

4. Fahrzeug nach einem der vorhergehenden Ansprüche, **dadurch gekennzeichnet, dass** der Elektromotor (14) drehmomentfest an ein Teilgetriebe angekoppelt ist.

5. Fahrzeug nach einem der vorhergehenden Ansprüche, **dadurch gekennzeichnet, dass** die zwischengeschaltete Kupplung eine schnell schaltende Kupplung ist, die in weniger als 150 msec geschlossen werden kann.

6. Verfahren zum Betreiben eines Fahrzeugs nach einem der vorhergehenden Ansprüche, wobei eine Teilgetriebe-Kupplung des Teilgetriebes, an welches der Elektromotor (14) gekoppelt ist, eine elektromotornahe Teilgetriebe-Kupplung bildet und eine Teilgetriebe-Kupplung des Teilgetriebes, an welches der Elektromotor (14) nicht gekoppelt ist, eine elektromotorferne Teilgetriebe-Kupplung bildet, **gekennzeichnet durch** folgende Schritte:
a) Während eines Elektrofahrbetriebs ist die zwischengeschaltete Kupplung (38) geöffnet, und der Verbrennungsmotor (12) ausgeschaltet, und
b) Starten des Verbrennungsmotors (12) durch Schließen der zwischengeschalteten Kupplung (38) und durch Übertragen der kinetischen Energie der während des Elektrofahrbetriebs angetriebenen Schwungmasse auf die Kurbelwelle (36), um den Verbrennungsmotor (12) auf eine Selbstlauf-Drehzahl zu bringen.

7. Verfahren nach Anspruch 6, **dadurch gekennzeichnet, dass** vor dem Schließen der zwischengeschalteten Kupplung (38) zum Starten gemäß Schritt b) und bei Erreichen einer vorgegebenen Mindestdrehzahl der Schwungmasse die Teilgetriebe-Kupplungen (26, 28) geöffnet oder im Schlupfbetrieb gehalten werden.

8. Verfahren nach Anspruch 6 oder 7, **dadurch gekennzeichnet, dass** für das Starten gemäß Schritt b) bei Fahrzeuggeschwindigkeit unterhalb einer vorgegebenen Geschwindigkeit, vor dem Schließen der zwischengeschalteten Kupplung und/oder nach dem Schließen der zwischengeschalteten Kupplung eine abtriebsseitige der beiden Teilgetriebe-Kupplungen (26, 28) in den Schlupfbetrieb geschaltet wird oder ist.

9. Verfahren nach Anspruch 8, **dadurch gekennzeichnet, dass** die abtriebsseitige Teilgetriebe-Kupplung im Schlupfbetrieb so eingestellt wird und der Elektromotor (14) auf eine solche Drehzahl gebracht wird, dass ein gefordertes Drehmoment an der Abtriebswelle (16) durch den Elektromotor (14) aufgebracht und/oder die Schwungmasse auf eine vorgegebene Mindestdrehzahl beschleunigt wird.

10. Verfahren nach Anspruch 8 oder 9, **dadurch gekennzeichnet, dass** die zwischengeschaltete Kupplung (38) unmittelbar vor Beginn des Schlupfbetriebs geöffnet ist und/oder dass der Schlupfbetrieb während des Startens des Verbrennungsmotors (12) im Schritt b) aufrechterhalten bleibt.

11. Verfahren nach einem der Ansprüche 6-10, **dadurch gekennzeichnet, dass** für das Starten gemäß Schritt b) bei Fahrzeuggeschwindigkeit unterhalb einer vorgegebenen Geschwindigkeit und/oder beim Starten gemäß Schritt b) während des Anfahrens des Fahrzeugs die elektromotornahe Teilgetriebe-Kupplung geschlossen wird und die elektromotorferne Teilgetriebe-Kupplung in einen Schlupfbetrieb gebracht wird, wobei das Drehmoment des Elektromotors (14) über beide Teilgetriebe-Kupplungen (26, 28) und über das elektromotorferne Teilgetriebe auf die Abtriebswelle (16) übertragen wird.

12. Verfahren nach Anspruch 11, **dadurch gekennzeichnet, dass** nach dem Schließen der zwischengeschalteten Kupplung (38) die elektromotornahe Teilgetriebe-Kupplung geschlossen bleibt und die elektromotorferne Teilgetriebe-Kupplung im Schlupfbetrieb bleibt, bis der Verbrennungsmotor (12) startet.

13. Verfahren nach Anspruch 11 oder 12, **dadurch gekennzeichnet, dass** nach Starten des Verbrennungsmotors (12) gemäß Schritt b) die elektromotorferne Teilgetriebe-Kupplung geschlossen wird und dass dann, wenn das vom Elektromotor (14) in das leistungsverzweigte Getriebe (20) eingebrachten Drehmoments durch das vom Verbrennungsmotor (12) in das leistungsverzweigte Getriebe (20) eingebrachte Drehmoment erreicht oder überschritten wird, die elektromotornahe Teilgetriebe-Kupplung geöffnet wird, sodass Drehmoment ausschließlich über den Verbrennungsmotor (12) zur Abtriebswelle (16) gelangt.

14. Verfahren nach einem der Ansprüche 6-13, **dadurch gekennzeichnet, dass** zum Starten des Verbrennungsmotors (12) gemäß Schritt b) während des elektrischen Fahrbetriebs oberhalb einer vorgegebenen Mindestgeschwindigkeit ein höherer als der niedrigste Gang eingelegt ist und dass die elektromotorferne Teilgetriebe-Kupplung in den Schlupfbetrieb geschaltet wird, wobei anschließend ein niedrigerer Gang im elektromotornahen Teilgetriebe zugeschaltet wird und die elektromotorferne Teilgetriebe-Kupplung geöffnet wird, sodass die Schwungmasse aufgrund des niedrigeren Gangs beschleunigt wird.

15. Verfahren nach Anspruch 14, **dadurch gekennzeichnet, dass** nach dem Starten des Verbrennungsmotors (12) dessen Drehmoment durch zumindest teilweises Schließen der elektromotorfernen Teilgetriebe-Kupplung zur Abtriebswelle (16) geleitet wird und die elektromotornahe Teilgetriebe-Kupplung geöffnet wird.

16. Verfahren nach Anspruch 14 oder 15, **dadurch gekennzeichnet, dass** zum Starten des Verbrennungsmotors (12) gemäß Schritt b) während des elektrischen Fahrbetriebs oberhalb einer vorgegebenen Mindestgeschwindigkeit zu Beginn der 3. Gang eingelegt ist, anschließend auf den 2. Gang zurückgeschaltet wird und die Abtriebswelle (16) über den 2. Gang vom Elektromotor (14) angetrieben wird und in einem darauffolgenden Schritt noch vor dem Schließen der zwischengeschalteten Kupplung die elektromotornahe Teilgetriebe-Kupplung geöffnet und die elektromotorferne Teilgetriebe-Kupplung geschlossen wird, sodass das Drehmoment des Elektromotors (14) über das elektromotornahe Teilgetriebe und die Abtriebswelle (16) in das elektromotorferne Teilgetriebe eingeleitet wird und durch Schließen der elektromotorfernen Teilgetriebe-Kupplung die Schwungmasse beschleunigt wird.

17. Verfahren nach einem der Ansprüche 6-16, **dadurch gekennzeichnet, dass** nach den Starten des Verbrennungsmotors (12) gemäß Schritt b) eine der Teilgetriebe-Kupplungen (26, 28) geschlossen wird, um die Kurbelwelle mit der Abtriebswelle (16) zu koppeln.

## Claims

1. Vehicle comprising an internal combustion engine (12) and an electric motor (14) for driving the vehicle and comprising a hybrid drive transmission unit which has an output shaft (16), a power-split transmission (20) which is interconnected between the internal combustion engine (12) and the output shaft (16) and has component transmissions (22, 24) and has component transmission clutches (26, 28) which are associated with the component transmissions (22, 24), wherein the electric motor (14) is coupled to one of the component transmissions which is close to the electric motor in order to be able to drive the output shaft (16) by means of said component transmission, **characterized by** a torsion damping unit (40) which is interconnected between the internal combustion engine (12) and the power-split transmission (20) and has an oscillating mass, and by a clutch (38) which is interconnected between the internal combustion engine (12) and the torsion damping unit (40).

2. Vehicle according to Claim 1, **characterized in that** the torsion damping unit (40) is a dual-mass flywheel, a torsion damper or a speed-adaptive absorber.

3. Vehicle according to Claim 1 or 2, **characterized in that** the electric motor (14) is coupled to that component transmission (22) which contains the second-lowest gear.

4. Vehicle according to one of the preceding claims, **characterized in that** the electric motor (14) is coupled fixedly in terms of torque to a component transmission.

5. Vehicle according to one of the preceding claims, **characterized in that** the interconnected clutch is a rapidly shifting clutch which can be closed in fewer than 150 msec.

6. Method for operating a vehicle according to one of the preceding claims, wherein a component transmission clutch of the component transmission to which the electric motor (14) is coupled forms a component transmission clutch which is close to the electric motor, and a component transmission clutch of the component transmission to which the electric motor (14) is not coupled forms a component transmission clutch which is remote from the electric motor, **characterized by** the following steps:
a) during an electric driving mode, the interconnected clutch (38) is open and the internal combustion engine (12) is switched off, and
b) starting of the internal combustion engine (12) by closing the interconnected clutch (38) and by transmitting the kinetic energy of the oscillating mass which is driven during the electric driving mode to the crankshaft (36) in order to bring the internal combustion engine (12) to a self-sustaining rotation speed.

7. Method according to Claim 6, **characterized in that**, before closing of the interconnected clutch (38) for starting purposes in accordance with step b) and when a prespecified minimum rotation speed of the oscillating mass is reached, the component transmission clutches (26, 28) are open or held in the slip mode.

8. Method according to Claim 6 or 7, **characterized in that**, for starting in accordance with step b) at a vehicle speed below a prespecified speed, before closing of the interconnected clutch and/or after closing of the interconnected clutch, an output-side component transmission clutch from amongst the two component transmission clutches (26, 28) will be or is shifted to the slip mode.

9. Method according to Claim 8, **characterized in that** the output-side component transmission clutch, in the slip mode, is adjusted and the electric motor (14) is brought to a rotation speed such that a required torque is applied to the output shaft (16) by the electric motor (14) and/or the oscillating mass is accelerated to a prespecified minimum rotation speed.

10. Method according to Claim 8 or 9, **characterized in that** the interconnected clutch (38) is opened immediately before the beginning of the slip mode and/or **in that** the slip mode is maintained during starting of the internal combustion engine (12) in step b).

11. Method according to one of Claims 6-10, **characterized in that**, for starting in accordance with step b) at a vehicle speed below a prespecified speed and/or during starting in accordance with step b) during start-up of the vehicle, the component transmission clutch which is close to the electric motor is closed and the component transmission clutch which is remote from the electric motor is brought to a slip mode, wherein the torque of the electric motor (14) is transmitted to the output shaft (16) via the two component transmission clutches (26, 28) and by means of the component transmission which is remote from the electric motor.

12. Method according to Claim 11, **characterized in that**, after closing of the interconnected clutch (38), the component transmission clutch which is close to the electric motor remains closed and the component transmission clutch which is remote from the electric motor remains in the slip mode, until the internal combustion engine (12) starts.

13. Method according to Claim 11 or 12, **characterized in that**, after starting of the internal combustion engine (12) in accordance with step b), the component transmission clutch which is remote from the electric motor is closed, and **in that**, when the torque which is introduced into the power-split transmission (20) by the electric motor (14) is reached or exceeded by the torque which is introduced into the power-split transmission (20) by the internal combustion engine (12), the component transmission clutch which is close to the electric motor is opened, so that torque passes to the output shaft (16) exclusively by means of the internal combustion engine (12).

14. Method according to one of Claims 6-13, **characterized in that**, for the purpose of starting the internal combustion engine (12) in accordance with step b), a higher gear than the lowest gear is selected above a prespecified minimum speed during the electric driving mode, and **in that** the component transmission clutch which is remote from the electric motor is shifted to the slip mode, wherein a lower gear is then engaged in the component transmission which is close to the electric motor and the component transmission clutch which is remote from the electric motor is opened, so that the oscillating mass is accelerated on account of the lower gear.

15. Method according to Claim 14, **characterized in that**, after starting of the internal combustion engine (12), the torque of said internal combustion engine is passed to the output shaft (16) by at least partially closing the component transmission clutch which is remote from the electric motor and the component transmission clutch which is close to the electric motor is opened.

16. Method according to Claim 14 or 15, **characterized in that**, for the purpose of starting the internal combustion engine (12) in accordance with step b), 3rd gear is initially selected above a prespecified minimum speed during the electric driving mode, there is then a downshift to 2nd gear and the output shaft (16) is driven by the electric motor (14) above 2nd gear and, in a following step, still before closing of the interconnected clutch, the component transmission clutch which is close to the electric motor is opened and the component transmission clutch which is remote from the electric motor is closed, so that the torque of the electric motor (14) is introduced into the component transmission which is remote from the electric motor by means of the component transmission which is close to the electric motor and the output shaft (16), and the oscillating mass is accelerated by closing the component transmission clutch which is remote from the electric motor.

17. Method according to one of Claims 6-16, **characterized in that**, after starting of the internal combustion engine (12) in accordance with step b), one of the component transmission clutches (26, 28) is closed in order to couple the crankshaft to the output shaft (16) .

## Revendications

1. Véhicule, comprenant un moteur à combustion interne (12) et un moteur électrique (14) pour entraîner le véhicule et une unité de transmission d'entraînement hybride qui présente un arbre de sortie (16), une transmission à dérivation de puissance (20), intercalée entre le moteur à combustion interne (12) et l'arbre de sortie (16) et pourvue de transmissions partielles (22, 24) et d'embrayages de transmission partielle (26, 28) qui sont associés aux transmissions partielles (22, 24), dans lequel le moteur électrique (14) est accouplé à l'une des transmissions partielles qui est une transmission partielle proche du moteur électrique afin de pouvoir entraîner l'arbre de sortie par l'intermédiaire de cette transmission partielle,
**caractérisé par** une unité d'amortissement de torsion (40) intercalée entre le moteur à combustion interne (12) et la transmission à dérivation de puissance (20) et pourvue d'une masse oscillante, et par un embrayage (38) intercalé entre le moteur à combustion interne (12) et l'unité d'amortissement de torsion (40).

2. Véhicule selon la revendication 1, **caractérisé en ce que** l'unité d'amortissement de torsion (40) est un volant bi-masse, un amortisseur de torsion ou un dispositif amortisseur adaptable en vitesse de rotation.

3. Véhicule selon la revendication 1 ou 2, **caractérisé en ce que** le moteur électrique (14) est accouplé à la transmission partielle (22) qui comprend la deuxième vitesse la plus basse.

4. Véhicule selon l'une quelconque des revendications précédentes, **caractérisé en ce que** le moteur électrique (14) est accouplé à une transmission partielle de manière solidaire en couple.

5. Véhicule selon l'une quelconque des revendications précédentes, **caractérisé en ce que** l'embrayage intermédiaire est un embrayage à action rapide qui peut être fermé en moins de 150 msec.

6. Procédé permettant de faire fonctionner un véhicule selon l'une quelconque des revendications précédentes, dans lequel un embrayage de transmission partielle de la transmission partielle auquel est accouplé le moteur électrique (14) constitue un embrayage de transmission partielle proche du moteur électrique, et un embrayage de transmission partielle de la transmission partielle auquel le moteur électrique (14) n'est pas accouplé constitue un embrayage de transmission partielle éloigné du moteur électrique, **caractérisé par** les étapes suivantes :
a) pendant un mode de fonctionnement électrique, l'embrayage intermédiaire (38) est ouvert, et le moteur à combustion interne (12) est coupé, et
b) démarrage du moteur à combustion interne (12) par fermeture de l'embrayage intermédiaire (38) et par transfert de l'énergie cinétique de la masse oscillante entraînée pendant le mode de fonctionnement électrique au vilebrequin (36) afin d'amener le moteur à combustion interne (12) à une vitesse de rotation d'auto-fonctionnement.

7. Procédé selon la revendication 6, **caractérisé en ce que** qu'avant la fermeture de l'embrayage intermédiaire (38) pour le démarrage selon l'étape b) et lorsqu'une vitesse de rotation minimale prédéfinie de la masse oscillante est attente, les embrayages de transmission partielle (26, 28) sont ouverts ou maintenus en mode de glissement.

8. Procédé selon la revendication 6 ou 7, **caractérisé en ce que** pour le démarrage selon l'étape b), à une vitesse de véhicule inférieure à une vitesse prédéfinie, avant la fermeture de l'embrayage intermédiaire et/ou après la fermeture de l'embrayage intermédiaire, un embrayage côté sortie des deux embrayages de transmission partielle (26, 28) sera ou est commuté sur le mode de glissement.

9. Procédé selon la revendication 8, **caractérisé en ce que** l'embrayage de transmission partielle côté sortie est réglé en mode de glissement de telle sorte, et le moteur électrique (14) est amené à une vitesse de rotation telle qu'un couple demandé est produit à l'arbre de sortie (16) par le moteur électrique (14), et/ou la masse oscillante est accélérée à une vitesse de rotation minimale prédéfinie.

10. Procédé selon la revendication 8 ou 9, **caractérisé en ce que** l'embrayage intermédiaire (38) est ouvert immédiatement avant le début du mode de glissement, et/ou **en ce que** le mode de glissement est maintenu pendant le démarrage du moteur à combustion interne (12) à l'étape b) .

11. Procédé selon l'une quelconque des revendications 6 à 10, **caractérisé en ce que** pour le démarrage selon l'étape b), à une vitesse de véhicule inférieure à une vitesse prédéfinie, et/ou au démarrage selon l'étape b) pendant une mise en marche du véhicule, l'embrayage de transmission partielle proche du moteur électrique est fermé, et l'embrayage de transmission partielle éloigné du moteur électrique est amené dans un mode de glissement, dans lequel le couple du moteur électrique (14) est transféré à l'arbre de sortie (16) par les deux embrayages de transmission partielle (26, 28) et par la transmission partielle éloignée du moteur électrique.

12. Procédé selon la revendication 11, **caractérisé en ce qu'**après la fermeture de l'embrayage intermédiaire (38), l'embrayage de transmission partielle proche du moteur électrique reste fermé, et l'embrayage de transmission partielle éloigné du moteur électrique reste en mode de glissement jusqu'à ce que le moteur à combustion interne (12) démarre.

13. Procédé selon la revendication 11 ou 12, **caractérisé en ce qu'**après le démarrage du moteur à combustion interne (12) selon l'étape b), l'embrayage de transmission partielle éloigné du moteur électrique est fermé, et **en ce que**, lorsque le couple introduit par le moteur électrique (14) dans la transmission à dérivation de puissance (20) est atteint ou dépassé par le couple introduit par le moteur à combustion interne (12) dans la transmission à dérivation de puissance (20), l'embrayage de transmission partielle proche du moteur électrique est ouvert de sorte que le couple atteint l'arbre de sortie (16) exclusivement par l'intermédiaire du moteur à combustion interne (12).

14. Procédé selon l'une quelconque des revendications 6 à 13, **caractérisé en ce que** pour le démarrage du moteur à combustion interne (12) selon l'étape b), pendant le mode de fonctionnement électrique au-dessus d'une vitesse minimale prédéfinie, une vitesse supérieure à la vitesse la plus basse est enclenchée, et **en ce que** l'embrayage de transmission partielle éloigné du moteur électrique est commuté sur le mode de glissement, dans lequel ensuite une vitesse inférieure est mise en circuit dans la transmission partielle proche du moteur électrique, et l'embrayage de transmission partielle éloigné du moteur électrique est ouvert de sorte que la masse oscillante est accélérée en raison de la vitesse inférieure.

15. Procédé selon la revendication 14, **caractérisé en ce qu'**après le démarrage du moteur à combustion interne (12), le couple de celui-ci est par une fermeture au moins partielle de l'embrayage de transmission partielle éloigné du moteur électrique dirigé vers l'arbre de sortie (16), et l'embrayage de transmission partielle proche du moteur électrique est ouvert.

16. Procédé selon la revendication 14 ou 15, **caractérisé en ce que** pour le démarrage du moteur à combustion interne (12) selon l'étape b), pendant le mode de fonctionnement électrique au-dessus d'une vitesse minimale prédéfinie, au début la 3ème vitesse est enclenchée, ensuite on rétrograde à la 2ème vitesse, et l'arbre de sortie (16) est entraîné par l'intermédiaire de la 2ème vitesse par le moteur électrique (14), et dans une étape consécutive, avant même la fermeture de l'embrayage intermédiaire, l'embrayage de transmission partielle proche du moteur électrique est ouvert et l'embrayage de transmission partielle éloigné du moteur électrique est fermé de sorte que le couple du moteur électrique (14) est introduit par l'intermédiaire de la transmission partielle proche du moteur électrique et de l'arbre de sortie (16) dans la transmission partielle éloignée du moteur électrique, et la fermeture de l'embrayage de transmission partielle éloigné du moteur électrique accélère la masse oscillante.

17. Procédé selon l'une quelconque des revendications 6 à 16, **caractérisé en ce qu'**après le démarrage du moteur à combustion interne (12) selon l'étape b), l'un des embrayages de transmission partielle (26, 28) est fermé pour accoupler le vilebrequin à l'arbre de sortie (16) .
